# EUROPÄISCHE PATENTANMELDUNG

(11) **EP 1 780 856 A2**
(43) Veröffentlichungstag der Anmeldung: **02.05.2007**
(21) Anmeldenummer: 06122956.3
(22) Anmeldetag: 25.10.2006
(51) Int. Cl.: H02H 3/02, H02H 9/04

(54) **Schaltungsanordnung zum Ausschalten einer Crowbar**

(30) Priorität: 27.10.2005 DE 102005051753
(71) Anmelder: Suzion Energy GmbH, 18055 Rostock (DE)
(72) Erfinder: Rafoth, Axel, 18055, Rostock (DE)
(74) Vertreter: Garrels, Sabine

(57) **Zusammenfassung**

Die Erfindung betrifft eine Schaltungsanordnung zum Ausschalten einer Crowbar bei laufendem Betrieb einer Windkraftanlage.
Aufgabe der Erfindung ist es, durch eine Schaltungsanordnung unter bestimmten Betriebsbedingungen beim Betreiben einer Windkraftanlage die Crowbar nach einem Fehler aktiv auszuschalten, ohne die WKA vom Netz zu trennen. Erfindungsgemäß wird eine Schaltungsanordnung vorgeschlagen, in der parallel zum Crowbar-Kreis, welcher aus einem oder mehreren Thyristor(en) mit Serienwiderstand besteht, ein Schalter anoden- oder kathodenseitig so angeordnet ist, dass er mit der Energie eines in diesem Kreis angeordneten elektrischen Speicher den Thyristor löschen kann. Somit kann eine Anlagenabschaltung zur Thyristorlöschung entfallen.

## Beschreibung

### Technisches Gebiet

Die Schaltungsanordnung wird für Stellsysteme an Wechselstromgeneratoren angewendet, bei denen eine Crowbar als Schutzelement eingesetzt wird und dient zum Ausschalten der Crowbar z.B. bei laufendem Betrieb einer Windkraftanlage (WKA).

### Stand der Technik

Die Generatoren von Windkraftanlagen sind an das öffentliche Stromversorgungsnetz angeschlossen. Zur Verbesserung der Anlageneigenschaften werden häufig Stromrichter mit leistungselektronischen Komponenten eingesetzt. Sie können Schaden nehmen, wenn es im Energieversorgungsnetz zu Störungen und Netzfehlern kommt. Zu ihrem Schutz wird häufig ein Kurzschließer, eine so genannte "Crowbar" eingesetzt. Sie übernimmt für sehr kurze Zeiten hohe Ströme, um die in diesen Fällen meist aus Schutzgründen abgeschalteten leistungselektronischen Stellglieder zu schützen. In Verbindung mit einem Serienwiderstand entmagnetisiert die Crowbar gleichzeitig den Generator.

Wegen Ihrer Robustheit werden als Crowbar häufig Thyristoren eingesetzt. Durch Thyristor-Crowbars werden die leistungselektronischen Komponenten vor gefährlichen Überspannungen geschützt.

Die eingesetzten Thyristoren haben den Nachteil, dass sie sich nur durch ein Abschalten der Gesamtanlage löschen (ausschalten) lassen. Zu diesem Zweck muss der Generator üblicherweise vom Netz getrennt werden.

Neue Netzanschlussregeln fordern einen Weiterbetrieb der WKA während und nach bestimmten Netzfehlern. Aus Selbstschutzgründen wird hier in vielen Fällen die Crowbar gezündet.

### Darstellung der Erfindung

Aufgabe der Erfindung ist es, durch eine Schaltungsanordnung unter bestimmten Betriebsbedingungen beim Betreiben einer Windkraftanlage die Crowbar nach einem Fehler aktiv auszuschalten, ohne die WKA vom Netz zu trennen.

Erfindungsgemäß wird eine Schaltungsanordnung vorgeschlagen, in der parallel zum Crowbar-Kreis, welcher aus einem oder mehreren Thyristor(en) mit Serienwiderstand besteht, ein Schalter anoden- oder kathodenseitig so angeordnet ist, dass er mit der Energie eines in diesem Kreis angeordneten elektrischen Speichers den Thyristor löschen kann. Somit kann eine Anlagenabschaltung zur Thyristorlöschung entfallen.

In einem Ausführungsbeispiel ist parallel zum anoden- oder kathodenseitigen Serienwiderstand des Crowbar-Kreises ein Speicher so angeordnet, dass mit seiner Energie durch den Schalter des Stellers, welcher parallel zum anoden- oder kathodenseitigen Serienwiderstand und dem Speicher des Crowbar-Kreises sowie dem Thyristor angeordnet ist, der Thyristor gelöscht wird.

Diese erfindungsgemäßen Anordnungen haben den besonderen Vorteil, dass der Aufwand für eine extra Komponente zum Löschen entfällt.

### Kurze Beschreibung der Abbildungen der Zeichnungen

Das Ausführungsbeispiel wird anhand von Figuren näher erläutert. Hierzu zeigt

Figur 1 erfindungsgemäße Schaltungsanordnung anodenseitig

Figur 2 erfindungsgemäße Schaltungsanordnung kathodenseitig

Figur 3 weitere Ausführungsform der erfindungsgemäßen Schaltungsanordnung kathodenseitig

Figur 4 weitere Ausführungsform der erfindungsgemäßen Schaltungsanordnung anodenseitig

### Weg(e) zur Ausführung der Erfindung

Die Anordnung von Speicherelementen im leistungselektronischen System erfolgt zum Zwecke der Ausschaltung des oder der Crowbar-Thyristoren.

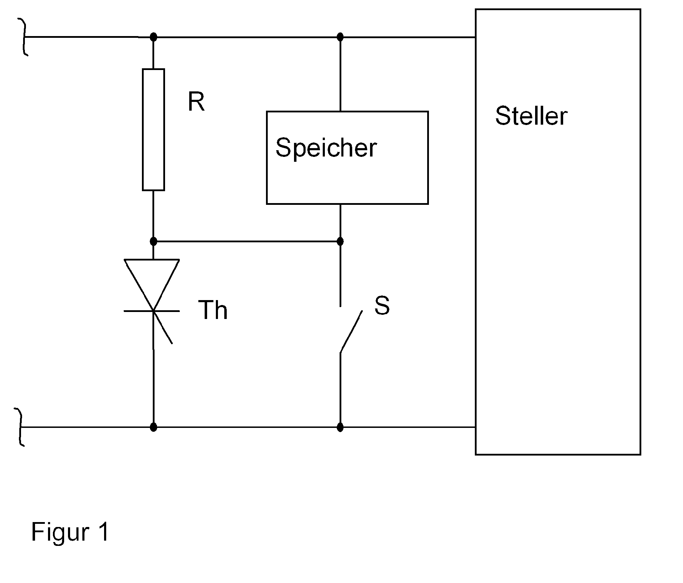

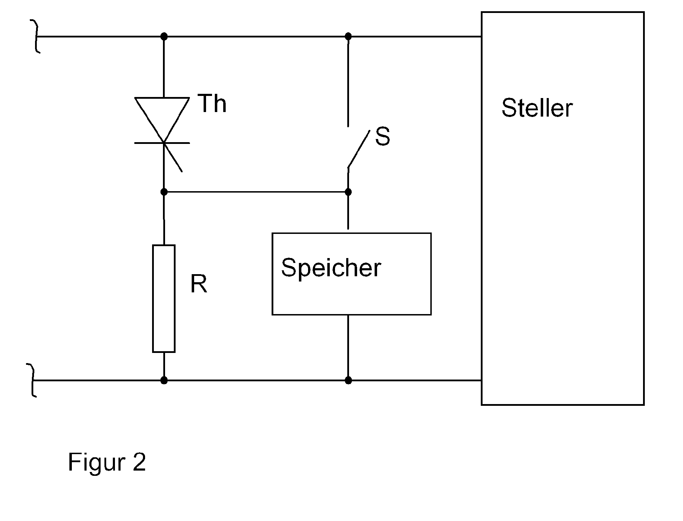

In den Figuren 1 und 2 wird die Anordnung des Schalters S und des Widerstandes R im Crowbar-Kreis vorgestellt. Der Widerstand R kann anoden- oder kathodenseitig des Thyristors angeordnet sein und nimmt beim Einschalten der Crowbar die Magnetisierungsenergie der Maschine auf.

Dem Widerstand R wird ein Speicher parallel geschaltet. Üblicherweise können hier kapazitive oder induktive Speicher eingesetzt werden.

Der Schalter S ist parallel zum Thyristor Th und in Reihe zum Speicher angeordnet.

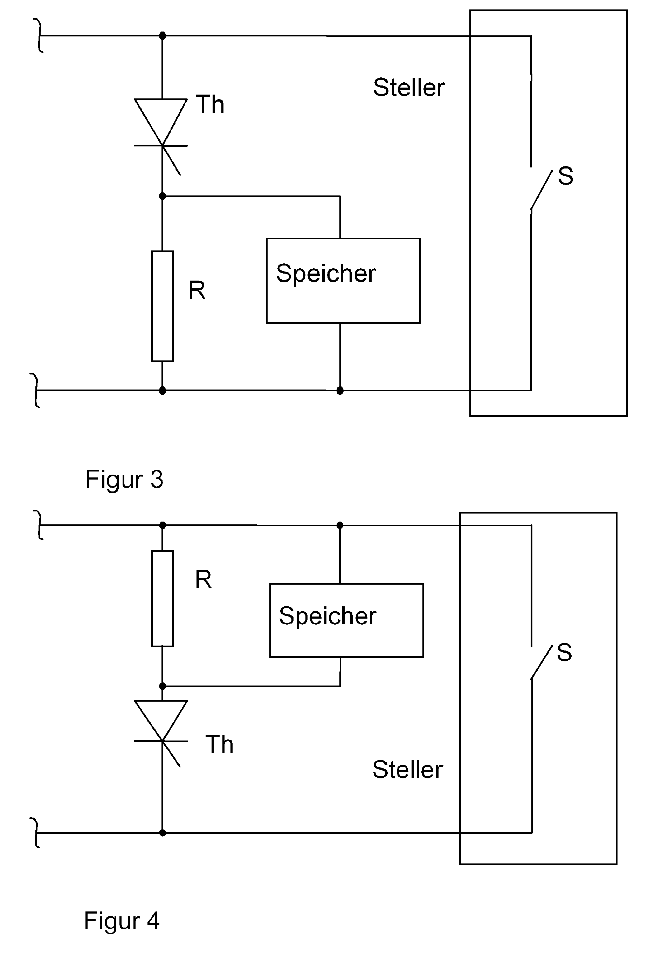

In den Figuren 3 und 4 werden weitere Ausführungsformen der erfindungsgemäßen Schaltungsanordnung kathoden- und anodenseitig aufgezeigt, in denen der üblicherweise im Steller bereits vorhandene Schalter S parallel zum Thyristor Th und zum Widerstand R und Speicher angeordnet ist.

Wenn nach dem Ende des Netzfehlers der Pulsschalter S wieder eingeschaltet wird, kann der Speicher am Thyristor einen negativen Stromfluss und damit Kommutierung erzwingen und so die Crowbar ausschalten.

## Patentansprüche

1. Schaltungsanordnung zum Ausschalten einer Crowbar **dadurch**
**gekennzeichnet, dass**
parallel zu einem Crowbar-Kreis, bestehend aus Thyristor(en) mit Serienwiderstand (R), ein Schalter (S) parallel zu dem oder den Thyristor(en) (Th) anoden- oder kathodenseitig so angeordnet ist, dass mit der Energie eines in diesem Kreis parallel zum Widerstand (R) angeordneten elektrischen Speichers der Thyristor gelöscht wird.

2. Schaltungsanordnung zum Ausschalten einer Crowbar nach Anspruch 1
**dadurch gekennzeichnet, dass**
parallel zum anoden- oder kathodenseitigen Serienwiderstand (R) des Crowbar-Kreises ein Speicher so angeordnet ist, dass mit seiner Energie durch den Schalter (S) des Stellers, welcher parallel zum anoden- oder kathodenseitigen Serienwiderstand (R) und dem Speicher des Crowbar-Kreises sowie dem Thyristor (Th) angeordnet ist, der Thyristor gelöscht wird.

3. Schaltungsanordnung zum Ausschalten einer Crowbar nach Anspruch 1 oder 2 **dadurch gekennzeichnet, dass**
kapazitive oder induktive Speicher eingesetzt werden.
